# EUROPÄISCHE PATENTSCHRIFT

(11) **EP 2 033 049 B1**
(45) Veröffentlichungstag und Bekanntmachung des Hinweises auf die Patenterteilung: **17.10.2018**
(21) Anmeldenummer: 07764690.9
(22) Anmeldetag: 16.06.2007
(51) Int. Cl.: B60R 1/00, B60R 11/04, H04N 5/232, B60R 11/00, G03B 15/00, G03B 37/00, H04N 5/225

(54) **KAMERASYSTEM FÜR EIN KRAFTFAHRZEUG**
CAMERA SYSTEM FOR A MOTOR VEHICLE
SYSTÈME CAMÉRA POUR VÉHICULE À MOTEUR

(30) Priorität: 28.06.2006 DE 102006029892
(43) Veröffentlichungstag der Anmeldung: 11.03.2009
(73) Patentinhaber: Bayerische Motoren Werke Aktiengesellschaft, 80809 München (DE)
(72) Erfinder: AUGST, Alexander, 80937 München (DE)
(74) Vertreter: Kammermeier, Peter Frank
(86) Internationale Anmeldenummer: PCT/EP2007/005323
(87) Internationale Veröffentlichungsnummer: WO 2008/000365

(56) Entgegenhaltungen:
- DE-A1- 10 013 425
- DE-A1-102004 039 450
- JP-A- 3 182 848
- JP-A- 58 194 640
- JP-A- H03 266 740
- JP-A- 2004 082 778
- KR-A- 20060 005 302
- US-A- 5 424 875
- US-A1- 2003 021 041

## Beschreibung

Die Erfindung betrifft ein Kamerasystem für ein Kraftfahrzeug.

Solche Kamerasysteme sind insbesondere bekannt im Zusammenhang mit kamerabasierten Fahrerassistenzsystemen in modernen Kraftfahrzeugen. Bei vielen Systemen dieser Art werden die von einer Kamera erfassten Bilder oder Bildsequenzen dem Fahrer des Kraftfahrzeugs in originärer oder aufbereiteter Form dargestellt.

Einen typischen Fall eines Kamerasystems für ein kamerabasiertes Fahrerassistenzsystem stellt eine so genannte Heckkamera zur Erfassung von Bildern und/oder Bildsequenzen im Rückraum eines Kraftfahrzeugs dar.

Es ist bekannt, eine solche Heckkamera baulich derart am Kraftfahrzeug anzubringen, dass sie, insbesondere während sie nicht benutzt wird, vor Verschmutzung und/oder Beschädigung geschützt wird und nach Möglichkeit von der Umwelt physikalisch abgeschottet wird. Hierfür existieren beispielsweise mechanische Lösungen mit einem mechanisch aufklappbaren Markenzeichen und einer mechanisch herausfahrbaren Kamera. Eine solche Art der Anbringung einer Kamera am Kraftfahrzeug ist auch aus der DE 10013425 A1 bekannt.

Eine solche Vorrichtung, bringt jedoch mehrere Nachteile mit sich. Zum einen bestehen bei einer solchen Lösung extrem beengte Platzverhältnisse für die Kamera und die ihr zugeordnete Elektronik. Eine grundsätzlich denkbare räumliche Trennung der Kamera von der zugeordneten Bildverarbeitungselektronik ist aus Kostengründen (z.B. wegen der dann erforderlichen Übertragungsstrecke zwischen Kamera und Bildverarbeitungselektronik) nicht wünschenswert. Zum anderen kann - je nach Ausführungsform - eine solche Vorrichtung eine hohe Anzahl beweglicher Teile implizieren, welche Verschleiß unterliegen, klemmen oder auch einfrieren können. Schließlich gehen die aufwändige Mechanik und die erforderliche kompakte Optronik mit hohen Kosten einher.

Abhängig von der jeweiligen Anwendung sind die Anforderungen an ein Kamerasystem für ein kamerabasiertes Fahrerassistenzsystem, insbesondere in Bezug auf die Ausrichtung und den Öffnungswinkel der Kamera, jedoch sehr unterschiedlich und nicht ohne weiteres miteinander vereinbar. Zur Lösung solcher Problemstellungen wären gemäß den aus dem Stand der Technik bekannten Verfahren und Vorrichtungen alleine am Heck des Kraftfahrzeugs mehrere Kameras bzw. Objektive erforderlich. Dies verursacht hohe Kosten, bereitet insbesondere konstruktive Schwierigkeiten und beeinträchtigt - da mehrere Öffnungen in der Außenhaut des Kraftfahrzeugs vorzusehen wären - unter anderem das Fahrzeugäußere. Um die Nachteile zu vermeiden, die durch die Anbringung mehrer Kameras bzw. Objektive entstehen würden, werden immer wieder Versuche unternommen, Bilder für mehrere Bildverarbeitungssysteme mit Hilfe einer einzigen Kamera und eines einzigen Objektivs zu erfassen. Ein solches Objektiv müsste jedoch beispielsweise einen extrem weiten Öffnungswinkel von über 180 Grad aufweisen, um den Anforderungen verschiedener Systeme zu genügen. Ein Objektiv mit einem solchen Öffnungswinkel weist jedoch in der Regel extreme kugelförmige Verzeichnungen auf, die nicht ausreichend elektronisch entzerrt werden können, da elektronische Entzerrungsverfahren bei solch großen Öffnungswinkeln keine zufriedenstellenden Ergebnisse liefern. Besonders in den Randbereichen nimmt die Bildqualität zudem aufgrund der sinkenden Raumwinkelauflösung und der optischen Randabschattung stark ab. Zudem sind Objektive mit einem solchen Öffnungswinkel, wenn überhaupt, nur zu sehr hohen Kosten verfügbar.

Eine grundsätzlich ebenfalls denkbare Vorrichtung mit mechanisch wechselbaren Objektiven (vgl. Mikroskop) ist im automotiven Bereich aufgrund der erforderlichen robusten und zugleich präzisen Mechanik kaum wirtschaftlich sinnvoll anwendbar.

Aus dem Dokument JP 3 182848 A ist ein Kamerasystem für ein Kraftfahrzeug bekannt mit einer Kamera, einem schwenkbaren Zierteil und einem daran befestigten Umlenkspiegel. Einfallende Strahlung ist über den Umlenkspiegel oder direkt zu der Kamera lenkbar. Durch eine Veränderung der Schwenkstellung des Zierteils und/oder der Position und/oder Ausrichtung der Kamera ist eine Veränderung der durch den Umlenkspiegel bewirkten optischen Abbildung verursachbar.

Das Dokument JP 2004 082778 A offenbart ebenfalls ein Kamerasystem für ein Kraftfahrzeug. Auch bei diesem Kamerasystem wird einfallende Strahlung über einen Umlenkspiegel zu der Kamera gelenkt. Der Umlenkspiegel kann durch einen linearen Antrieb verschoben werden, wodurch unterschiedliche Teile seiner uneinheitlich geformten Oberfläche die einfallende Strahlung zu der Kamera lenken. Es ergeben sich dadurch abhängig von der linearen Verschiebung unterschiedliche optische Abbildungen.

Das Dokument JP H03 266740 A offenbart ein Kamerasystem für ein Kraftfahrzeug entsprechend dem Oberbegriff des Patentanspruchs 1.

Aufgabe der Erfindung ist es, ein kostengünstiges und robustes Kamerasystem für ein Kraftfahrzeug zu schaffen, welches in mehreren durch unterschiedliche Anforderungen geprägten Anwendungen einsetzbar ist.

Diese Aufgabe wird erfindungsgemäß gelöst durch ein Kamerasystem gemäß Patentanspruch 1. Bevorzugte Ausführungsformen und vorteilhafte Weiterbildungen der Erfindung ergeben sich aus den abhängigen Patentansprüchen.

Erfindungsgemäß ist einfallende Strahlung über einen oder mehrere Umlenkspiegel zu der Kamera lenkbar. Durch die Verwendung eines oder mehrerer Umlenkspiegel kann die Kamera einschließlich der zugehörigen Bildverarbeitungselektronik im Inneren des Fahrzeuges an einer geeigneten Stelle fest montiert werden. Vorzugsweise wird die Kamera an einer Stelle angeordnet, an welcher entweder ohnehin ausreichend Bauraum zur Verfügung steht oder mit vertretbarem Aufwand Bauraum geschaffen werden kann. Nur zumindest einer der verwendeten Umlenkspiegel muss an bzw. nahe der Außenhaut des Kraftfahrzeugs angeordnet werden. Die Kamera kann auf diese Weise gut vor äußeren Einflüssen wie Niederschlag, Spritzwasser und Steinschlägen geschützt werden. Auch ein verbesserter Kälte-/Wärmeschutz kann so erreicht werden. Außerdem bestehen verglichen zu einer Anbringung der Kamera an der Außenhaut des Kraftfahrzeugs geringere Anforderungen bezüglich der maximalen Abmessungen der Kamera und es ist keine räumliche Trennung von Kamera und Elektronik erforderlich.

Je nach Ausführungsform der Erfindung können ein einziger oder mehrere Umlenkspiegel dazu dienen, einfallende Strahlung zu der Kamera zu lenken.

Die Außenhaut des Kraftfahrzeugs muss eine Öffnung aufweisen, durch welche die Strahlung eintreten kann, die zur Kamera gelenkt werden soll. Die Umlenkung durch den Umlenkspiegel kann je nach Ausführungsform der Erfindung vor, bei oder nach dem Eintritt der Strahlung durch diese Öffnung erfolgen. Für das erfindungsgemäße Kamerasystem muss jedoch im einfachsten Fall nur eine einzige Öffnung in der Außenhaut des Kraftfahrzeugs vorgesehen werden. Dies ist aus mehreren Gründen als Vorteil zu erachten. Öffnungen in der Außenhaut begünstigen häufig das Eintreten von Feuchtigkeit in die Karosserie des Kraftfahrzeugs. Sie können aerodynamische Beeinträchtigungen verursachen. Zudem können Sie das äußere Erscheinungsbild des Kraftfahrzeugs beeinträchtigen.

Indem, wie die Erfindung vorsieht, zumindest ein Umlenkspiegel baulich an ein schwenkbares Zierteil gekoppelt ist, kann eine Konstruktion erreicht werden, bei welcher zudem die Nachteile der einzigen für die Erfindung erforderlichen Öffnung in der Außenhaut des Kraftfahrzeugs vermieden bzw. gering gehalten werden.

Vorzugsweise ist die Öffnung in der Außenhaut des Kraftfahrzeugs weitgehend oder vollständig durch das Zierteil abdeckbar. Die ästhetischen Nachteile einer solchen Öffnung in der Außenhaut können somit vermieden bzw. gering gehalten werden. Außerdem können die aerodynamischen Nachteile einer solchen Öffnung in der Außenhaut vermieden bzw. gering gehalten werden. Ferner kann auch ein Eintreten von Staub und Feuchtigkeit bei geeigneter Ausführung wirkungsvoll verhindert werden.

Je nach Ausführungsform kommen verschiedenste Zierteile an einem Kraftfahrzeug für die Ausführung der Erfindung in Betracht, beispielsweise ein Markenzeichen, eine Zierleiste oder ein Teil einer solchen. Viele moderne Kraftfahrzeuge sind insbesondere im Heckbereich mit Zierleisten, beispielsweise in Chrom-Ausführung, ausgestattet. Denkbar ist auch eine bauliche Kopplung an eine Griffleiste, beispielsweise eine Griffleiste an einer Heckklappe. Vorzugsweise wird ein Zierteil gewählt, welches im Normalbetrieb - zumindest in der Richtung des erfindungsgemäßen Verschwenkens - nicht mit großen Kräften oder Momenten beaufschlagt wird. Beispielsweise sollte, im Falle der baulichen Kopplung an eine Griffleiste an einer Heckklappe, dieselbe nicht zu Zwecken der Öffnung der Heckklappe in dieselbe Richtung mit Kräften bzw. Momenten beaufschlagt werden, in welcher sie zu Zwecken der Erfindung verschwenkbar ist. Das Zierteil sollte vorteilhafterweise, insbesondere für eine geringe bewegte Masse, möglichst verhältnismäßig klein und leicht dimensioniert sein. Im Falle der Anwendung der Erfindung im Zusammenhang mit einer Zierleiste, bietet es sich daher an, die Zierleiste in Abschnitte zu unterteilen und nur einen dieser Abschnitte zu Zwecken der Erfindung zu verschwenken.

Vorzugsweise handelt es sich bei dem Zierteil um ein Markenzeichen. Unter einem Markenzeichen ist dabei ein Erkennungszeichen an einem Kraftfahrzeug zu verstehen, das typischerweise grafisch, symbolisch und/oder textuell auf den Hersteller des Kraftfahrzeugs hinweist (z.B. "BMW-Propeller", "Mercedes-Stern", ...). Unter einem Markenzeichen im Sinne der Erfindung soll jedoch beispielsweise auch ein Erkennungszeichen verstanden werden, welches beispielsweise auf ein Fahrzeugmodell, eine Fahrzeugbaureihe oder einen anderen Sachverhalt (etwa auf einen Fahrzeugeigentümer bzw. -vermieter) hinweist. Solche Markenzeichen, insbesondere hinweisend auf den Hersteller, sind an modernen Kraftfahrzeugen häufig als separates Bauteil ausgeführt, beispielsweise als Plakette. Typischerweise weist ein solches Markenzeichen, eine im Wesentlichen flache bzw. leicht nach außen gewölbte Bildseite auf. Diese Bildseite kann beispielsweise den eigentlichen grafischen, symbolischen und/oder textuellen Hinweis auf den Hersteller tragen, beispielsweise als Aufdruck. Herkömmliche Markenzeichen werden typischerweise so am jeweiligen Kraftfahrzeug angebracht, dass die Bildseite zum Fahrzeugäußeren weist.

Auch ein bei der Erfindung verwendetes Markenzeichen weist eine Bildseite auf, die zum Fahrzeugäußeren kehrbar ist. Vorzugsweise kann das bei der Erfindung verwendete Markenzeichen durch geeignetes Verschwenken in zumindest zwei verschiedene stabile Schwenkstellungen gebracht werden. In einer ersten stabilen Schwenkstellung (im Folgenden auch Funktionsstellung genannt) wird einfallende Strahlung tatsächlich über den an das Markenzeichen gekoppelten Umlenkspiegel zu der Kamera gelenkt. In einer zweiten stabilen Schwenkstellung (im Folgenden auch Ruhestellung genannt) ist die Bildseite des Markenzeichens zum Fahrzeugäußeren gekehrt.

Auch andere für die Erfindung in Betracht zu ziehende Zierteile weisen eine der Bildseite eines Markenzeichens entsprechende Zierseite auf. Gemäß einer bevorzugten Ausführungsform der vorliegenden Erfindung ist das Zierteil im Wesentlichen flach ausgeführt und trägt den Umlenkspiegel auf einer der Zierseite gegenüberliegenden Seite. Im Falle eines Markenzeichens ist also das Markenzeichen vorzugsweise im Wesentlichen flach ausgeführt und trägt den Umlenkspiegel auf seiner - sofern die Bildseite als Vorderseite definiert ist - Rückseite.

Die Verwendung eines Markenzeichens als Zierteil im Sinne der Erfindung ist besonders vorteilhaft aufgrund der in der Regel weitgehend flachen Form eines Markenzeichens, der in der Regel sowohl mittigen als auch exponierten Anbringungsposition eines Markenzeichens am Fahrzeug und der typischen Form und Größe eines Markenzeichens, welche in etwa derjenigen eines nach technischen Gesichtspunkten geeigneten Umlenkspiegels entsprechen.

Bei der weiteren Beschreibung der Erfindung wird zugunsten einer anschaulichen Darstellung ohne Beschränkung der Allgemeinheit davon ausgegangen, dass es sich bei dem Zierteil um ein Markenzeichen handelt. Dem Fachmann leuchtet jedoch ein, dass viele der nachfolgend beschriebenen Merkmale der Erfindung ohne Weiteres auf den Fall der baulichen Kopplung des Umlenkspiegels an ein anderes Zierteil übertragbar sind und sich daraus dieselben bzw. ähnliche Vorteile ergeben. Soweit übertragbar, soll der Fall anderer Zierteile daher gleichermaßen als offenbart angesehen werden.

Das Verschwenken des Markenzeichens wird vorzugsweise durch ein geeignetes Antriebselement (z.B. Elektromotor) bewerkstelligt.

Zum Verschwenken wird das Markenzeichen vorzugsweise um eine Achse verdreht. Bei der Drehachse handelt es sich dabei vorzugsweise um eine horizontale, beispielsweise durch den Schwerpunkt des Markenzeichens verlaufende Achse. Es wird dann ein geringes Drehmoment für die Verdrehung des Markenzeichens benötigt und die Stabilisierung des Markenzeichens in einer bestimmten Schwenkstellung erfordert ein geringes Haltemoment. Die Stabilisierung kann unter Ausnutzung eines Einrast-Effekts gegebenenfalls sogar ohne gezielte Kraft- bzw. Momenteneinwirkung erfolgen.

Unter dem Begriff des Verschwenkens ist im Sinne der Erfindung nicht nur eine reine Verdrehung zu verstehen. Vielmehr ist der Begriff weit auszulegen. Unter einem Verschwenken im Sinne der Erfindung soll beispielsweise auch eine Klappbewegung oder eine ähnliche Bewegung, bei welcher die räumliche Orientierung des Markenzeichens verändert wird, verstanden werden. Das Verschwenken kann auch um mehr als eine Achse stattfinden und es kann durch mehrere Antriebselemente verursacht werden.

Vorzugsweise ist das Markenzeichen, die bauliche Kopplung des Umlenkspiegels an dasselbe und der Schwenkmechanismus für das Verschwenken des Markenzeichens so gestaltet, dass das Markenzeichen derart verschwenkt werden kann, dass das optische Erscheinungsbild des an dem Kraftfahrzeug angebrachten Markenzeichens in der Ruhestellung dem optischen Erscheinungsbild eines herkömmlichen Markenzeichens gleicht. Bei Nichtnutzung können Kamera und Umlenkspiegel dann nicht nur geschützt, sondern vollständig unsichtbar bleiben. Eine Beeinträchtigung des äußeren Erscheinungsbilds des Kraftfahrzeugs wird vermieden. Auch ist für Unbeteiligte dann vorteilhafterweise nicht erkennbar, ob das Kraftfahrzeug überhaupt mit einem erfindungsgemäßen Kamerasystem ausgerüstet ist. Das Risiko eines Diebstahls oder einer mutwilligen Beschädigung wird somit verringert.

Vorzugsweise ist das Markenzeichen, die bauliche Kopplung des Umlenkspiegels an dasselbe und der Schwenkmechanismus für das Verschwenken des Markenzeichens so gestaltet, dass das Markenzeichen derart verschwenkt werden kann, dass die Aerodynamik des Kraftfahrzeugs durch das in der Ruhestellung befindliche Markenzeichens nicht mehr gestört wird als durch ein herkömmliches Markenzeichen. Insbesondere soll sich das erfindungsgemäße Markenzeichen in der Ruhestellung wie ein herkömmliches Markenzeichen an die Außenhaut des Kraftfahrzeugs anschmiegen. Somit kann - insbesondere bei Nichtnutzung des erfindungsgemäßen Kamerasystems - eine Beeinträchtigung der Aerodynamik des Kraftfahrzeugs vermieden werden.

Vorzugsweise verhindert eine Dichtung in der Ruhestellung des Markenzeichens das Eintreten von Staub und/oder Feuchtigkeit in die durch das Markenzeichen abgedeckte Öffnung in der Außenhaut des Kraftfahrzeugs.

Bei Verwendung mehrerer Umlenkspiegel ist vorzugsweise nur der im Strahlengang am weitesten von der Kamera entfernte Umlenkspiegel an das Markenzeichen gekoppelt. Die übrigen Umlenkspiegel können sich dann - wie die Kamera - ebenfalls geschützt im Fahrzeuginneren befinden. Außerdem gestaltet sich die bauliche Kopplung des nur einen Umlenkspiegels an das Markenzeichen verhältnismäßig einfach. Zudem wird die beim Verschwenken bewegte Masse gering gehalten.

Aus dem Stand der Technik, insbesondere der DE 10013425 A1, ist es - wie eingangs erläutert - bekannt, eine Kamera für die Umfelderfassung bei einem Kraftfahrzeug "hinter" einem Markenzeichen anzubringen. Dadurch wird vor allem die für eine Bilderfassung günstige Position eines Markenzeichens an einem Kraftfahrzeug optimal genutzt. Demgegenüber besitzt die Erfindung den wesentlichen Vorsprung, dass ein Umlenkspiegel baulich an ein solches Markenzeichen bzw. ein anderes Zierteil gekoppelt wird. Wesentliche Vorteile der Nutzung eines Umlenkspiegels wurden oben bereits erläutert. Etwa eröffnet die Nutzung eines Umlenkspiegels große Freiheiten (beispielsweise hinsichtlich Einbaurichtung und Bauraum) bei der Anbringung der Kamera. So kann eine Kamera mit länglicher Form beispielsweise auch quer eingebaut werden, wenn in Längsrichtung nicht ausreichend Bauraum zur Verfügung steht. Die einfallende Strahlung muss lediglich über geeignete Spiegelungen zu der Kamera gelenkt werden. Auch kann - insbesondere bei Frontkameras - die Gefahr einer Beschädigung durch Steinschlag verringert werden, denn statt die Kamera ungeschützt frontal auszurichten wird dieser Gefahr - selbst in der Funktionsstellung - lediglich der Umlenkspiegel ausgesetzt werden, während die Kamera im Fahrzeuginneren, zu welcher der Spiegel die Strahlung lenkt, keinem direkten Steinschlag ausgesetzt ist.

Zudem ist ein Austausch des Umlenkspiegels im Bedarfsfall wesentlich einfacher und kostengünstiger zu bewerkstelligen als ein Austausch der Kamera. Zu bedenken ist auch, dass ein Austausch des Umlenkspiegels bei geeigneter Ausführungsform der Erfindung ohne jeglichen Eingriff in die Elektronik des Kraftfahrzeugs erfolgen kann.

Ferner können, sofern der Umlenkspiegel neben der Umlenkung des einfallenden Strahlung auch eine optische Abbildung bewirkt, alleine durch die Verwendung unterschiedlicher Umlenkspiegel ganz unterschiedliche Bildaufnahmefunktionen realisiert werden.

In der Ruhestellung kann selbst der Umlenkspiegel wirkungsvoll geschützt werden, da in der Ruhestellung nicht der Umlenkspiegel, sondern die Bildseite des Markenzeichens zum Fahrzeugäußeren weist. Bei der Erfindung können also beide wesentlich zur Bildqualität beitragenden Komponenten (Umlenkspiegel und Kamera) weitestgehend geschützt bleiben.

Ein weiterer wesentlicher Vorteil der Erfindung gegenüber den aus dem Stand der Technik bekannten Vorrichtungen besteht darin, dass die Wirkung des baulich an das Markenzeichen gekoppelten Umlenkspiegels nicht notwendigerweise auf eine reine Umlenkung beschränkt ist. Vielmehr kann der Umlenkspiegel bereits eine optische Abbildungsfunktion erfüllen. Gemäß einer bevorzugten Ausführungsform der vorliegenden Erfindung ist der Umlenkspiegel dementsprechend nicht nur flach, sondern entsprechend einer gewünschten optischen Abbildungsfunktion (z. B. eine weitwinklige Ansicht) gekrümmt gestaltet. Der Umlenkspiegel kann dazu so ausgestaltet werden, dass die von einer weitwinkligen Optik prinzipbedingt eingebrachten Verzeichnungen vermieden bzw. auskorrigiert werden. Sowohl der Raumwinkel als auch die optische Abbildungsfunktion lassen sich mit einem speziell gekrümmten Spiegel modellieren. Auch eine trapezförmige Bildtransformation ist für eine spezielle Form der Bildentzerrung durch eine spezielle Krümmung des Umlenkspiegels möglich.

Prinzipiell ist durch einen geeigneten Krümmungsverlauf des Umlenkspiegels auch eine optische Abbildungsfunktion modellierbar, die bestimmte Bildbereiche (z.B. Anhängerkopplung oder andere Aufmerksamkeitsschwerpunkte) vergrößert abbildet. Letzteres kann entweder als ein Bild im Bild mit Abgrenzung oder aber auch als übergangslose ortsabhängige Vergrößerung dargestellt werden. Somit kann für den Betrachter der Effekt erzeugt werden, dass das Bild in einem bestimmten Teil, beispielsweise dem unteren Bereich des Sehfeldes, gegenüber der übrigen Bildfläche vergrößert wird. Ein vergleichbarer Effekt wird beispielsweise bei speziellen Lesebrillen mit Hilfe spezieller Linsen realisiert. Die Vergrößerung bzw. Hervorhebung bestimmter Bildbereiche kann zur besseren Wahrnehmbarkeit der Umweltinformation durch den Fahrer und/oder eine automatische Bildauswertung beitragen. Vorzugsweise kann der vergrößerte Bereich durch eine Variation der Schwenkstellung des Markenzeichens variiert werden.

Selbst ein sehr aufwändig ausgeführter Umlenkspiegel ist - verglichen mit einer anderen vergleichbaren, beispielsweise besonders weitwinkligen, Optik und/oder den für eine entsprechende elektronische Bildverzerrung bzw. Bildentzerrung erforderlichen Bildverarbeitungsmitteln - kostengünstig bereitstellbar.

Die erfindungsgemäße Vorrichtung erlaubt auch eine virtuelle Transformation der Blickperspektive der Kamera. Dabei kann es sich beispielsweise um eine "Top-View"-Transformation handeln. Bei dieser wird beispielsweise das aus der Heckperspektive erfasste Videobild zur besseren Übersichtlichkeit für den Fahrer zu einem scheinbar von oben erfassten Bild transformiert. Gemäß dem Stand der Technik wird dies elektronisch realisiert und erfordert Hardwareressourcen, die eingespart werden könnten, wenn eine erfindungsgemäße Vorrichtung Anwendung findet und durch diese eine entsprechende Transformation bewerkstelligt wird.

Die erfindungsgemäße Vorrichtung hat bei allen beschriebenen optischen Transformationen einen prinzipiellen Vorteil gegenüber elektronischen Bildtransformationsverfahren, die gemäß dem Stand der Technik eingesetzt werden, denn die optischen Transformationen erfolgen bei der erfindungsgemäßen Vorrichtung verzögerungsfrei. Die Verzögerungszeit von beispielsweise ca. 30 Millisekunden, die bei vielen elektronischen Verfahren und Vorrichtungen gemäß dem Stand der Technik für eine optische Transformation benötigt wird, addiert sich zu einer eventuellen Sensor- und Displayreaktionszeit und ist somit bei einigen Situationen im Straßenverkehr nicht zu vernachlässigen und überaus störend. Die erfindungsgemäße Vorrichtung ist hingegen absolut "realzeitfähig".

Gemäß einer bevorzugten Ausführungsform der Erfindung sind der Umlenkspiegel und die übrigen Bestandteile des Kamerasystems so ausgestaltet, dass durch eine Veränderung der Schwenkstellung des Markenzeichens eine Veränderung der durch den Umlenkspiegel bewirkten optischen Abbildung verursachbar ist. Somit sind je nach Schwenkstellung des Markenzeichens unterschiedliche optische Effekte erzielbar.

Gemäß einer besonders bevorzugten Ausführungsform der Erfindung ist der Umlenkspiegel so gestaltet, dass nicht seine gesamte Oberfläche gleichzeitig zur Umlenkung der einfallenden Strahlung erforderlich ist, sondern jeweils nur ein Ausschnitt der Oberfläche. Der Schwenkmechanismus kann dann so gestaltet werden, dass durch eine Veränderung der Schwenkstellung des Markenzeichens ein anderer Ausschnitt der Oberfläche des Umlenkspiegels die einfallende Strahlung zur Kamera lenkt. Dann wiederum kann die gesamte Oberfläche des Umlenkspiegels, insbesondere deren Krümmung, so gestaltet werden, dass durch eine Veränderung der Schwenkstellung des Markenzeichens eine Veränderung der durch den Umlenkspiegel bewirkten optischen Abbildung verursacht wird. Insbesondere kann die Oberfläche des Umlenkspiegels so gestaltet werden, dass durch eine kontinuierliche Veränderung der Schwenkstellung des Markenzeichens eine kontinuierliche Veränderung des durch den Umlenkspiegel bewirkten optischen Effekts verursacht wird, beispielsweise von weitwinklig zu schmalwinklig.

Alternativ oder zusätzlich kann durch eine kontinuierliche Veränderung der Schwenkstellung die Richtung verändert werden, aus welcher einfallende Strahlung zur Kamera gelenkt wird. Es kann dann statt eines Schwenks der Kamera, das Markenzeichen verschwenkt werden, um die effektive Blickrichtung der Kamera zu variieren. Dies ist insbesondere deshalb vorteilhaft, weil das Markenzeichen wesentlich kleiner und leichter als die Kamera ausgeführt werden kann und somit leichter verschwenkbar ist.

Konstruktiv sehr leicht umsetzbar und somit vorteilhaft ist, ist auch eine Vorrichtung, die durch einen Wechsel zwischen mehreren diskreten Schwenkstellungen einen Wechsel zwischen verschiedenen optischen Effekten erlaubt. Konstruktiv einfach beherrschbar ist insbesondere der Fall, dass durch einen Wechsel zwischen zwei diskreten Schwenkstellungen ein Wechsel zwischen zwei unterschiedlichen optischen Effekten erfolgt. Beispielsweise kann dann durch einen Wechsel der Schwenkstellung entweder eine weitwinklige Ansicht oder eine Vergrößerungsansicht einstellbar sein.

Hierzu weist der baulich an das Markenzeichen gekoppelte Umlenkspiegel vorzugsweise eine erste zur Umlenkung einfallender Strahlung geeignete Spiegelfläche und zumindest eine zweite ebenfalls zur Umlenkung einfallender Strahlung geeignete Spiegelfläche auf, wobei die zweite Spiegelfläche einen von der ersten Spiegelfläche unterschiedlichen Krümmungsverlauf besitzt und das Markenzeichen derart schwenkbar ist, dass einfallende Strahlung wahlweise von der ersten oder der zweiten Spiegelfläche zu der Kamera lenkbar ist. Durch jede der beiden Spiegelflächen kann durch den jeweiligen Krümmungsverlauf ein bestimmter optischer Effekt erzielt werden. Durch das Verschwenken des Markenzeichens kann eingestellt werden, welche der beiden Spiegelflächen das einfallende Licht zur Kamera lenkt, d.h. welche der beiden Spiegelflächen "aktiv" ist.

Das Markenzeichen kann in diesem Fall vorzugsweise wahlweise in zumindest drei verschiedene stabile Schwenkstellungen gebracht werden kann: die Ruhestellung und zwei verschiedene Funktionsstellungen - eine für jeden erzielbaren optischen Effekt. Das Kamerasystem ist dann in mechatronischer Hinsicht tri-stabil ausgeführt. Der Umlenkspiegel ist in einem solchen Fall vorzugsweise derart baulich an das Markenzeichen gekoppelt, dass die Bildseite des Markenzeichens und die beiden Spiegelflächen jeweils um etwa 120 Grad gegeneinander versetzt sind. Zum Erreichen einer flacheren Bauform kann der Winkel zwischen den beiden Spiegelseiten demgegenüber stumpfer und die beiden anderen Winkel dementsprechend spitzer gestaltet werden.

Bei geeigneter Konstruktion und ggf. geeignetem Schwenkmechanismus ist das oben für zwei Spiegelflächen beschriebene Prinzip auch auf eine höhere Anzahl von Spiegelflächen übertragbar (z. B. n Spiegelflächen, n+1 stabile Schwenkstellungen).

Alternativ zur oben beschriebenen Ausführung mit mehreren Spiegelflächen, die unterschiedliche Krümmungsverläufe besitzen, ist auch eine Ausführung denkbar, bei welcher zumindest zwei Spiegelflächen zwar den gleichen oder einen ähnlichen Krümmungsverlauf besitzen, die Gesamtanordnung jedoch so ausgeführt ist, dass die Spiegelflächen jeweils bei Verwendung unterschiedlich relativ zum Kameraobjektiv angeordnet sind. Auch auf diese Weise sind unterschiedliche optische Effekte durch die Verwendung der einzelnen Spiegelflächen erzielbar.

Gemäß einer weiteren bevorzugten Ausführungsform der Erfindung kann auch die Strahlung mehrerer in der Realität nicht aneinander angrenzender Bildausschnitte zurselben Zeit so zur Kamera gelenkt werden, dass sie bei dieser benachbart abgebildet werden. Realisiert werden kann dies durch einen geeigneten Krümmungsverlauf des Umlenkspiegels bzw. einer der Spiegelflächen - sofern der Umlenkspiegel mehrere Spiegelflächen aufweist. Beispielsweise könnten dann zwei Seitenansichten (vom Fahrzeug weg blickend im Wesentlichen bzw. annähernd senkrecht zur Fahrtrichtung) mit derselben Kamera zurselben Zeit - kombiniert in einem gemeinsamen Bild - aufgenommen werden. Ebenso könnten zwei Seitenansichten und eine Ansicht nach hinten (vom Fahrzeug weg blickend im Wesentlichen entgegen der Fahrtrichtung) mit derselben Kamera zurselben Zeit abgebildet werden. Auf diese Weise kann die Funktionalität einer oder mehrerer eher seitlich ausgerichteter Kameras sowie einer Heckkamera durch ein Kamerasystem mit nur einer einzigen Kamera übernommen werden, ohne dass diese Kamera exponiert angebracht und/oder selbst verschwenkt werden müsste.

Der jeweilige Umlenkspiegel bzw. die jeweilige Spiegelfläche des Umlenkspiegels kann - insbesondere bei einer solchen Ausführungsform der Erfindung - als Umlenkprisma (oder als Kombination aus Umlenkprisma und zumindest einem weiteren Spiegelelement) ausgebildet sein. Ebenso kann der Umlenkspiegel bzw. zumindest eine der Spiegelflächen des Umlenkspiegels als Kombination mehrerer (z. B. dreier) Spiegelteile bzw. Flächenteile ausgestaltet sein. Auch jeder solche Spiegelteil bzw. Flächenteil kann je nach Bedarf zur Erzielung weiterer optischer Effekte gekrümmt ausgestaltet werden.

Wie oben bereits angedeutet, kann eine solche zusammengesetzte Ansicht auch durch eine von mehreren Spiegelflächen, die der Umlenkspiegel aufweist und die jeweils einen bestimmten optischen Effekt verursachen, erzielt werden. Es kann somit auch ein Wechsel zwischen einer zusammengesetzten Ansicht (Spiegelfläche mit mehreren Flächenteilen) und einer nicht zusammengesetzten Ansicht (Spiegelfläche mit nur einem Flächenteil) erreicht werden. Beispielsweise könnte dann wahlweise - je nach Schwenkstellung - entweder eine weitwinklige Ansicht der Umgebung mit nach hinten gerichteter optischer Achse oder ein zweigeteiltes Bild mit zwei Seitenansichten abgebildet werden.

In der vorliegenden Beschreibung wird von der Definition ausgegangen dass ein Umlenkspiegel mehrere Spiegelflächen aufweisen kann. Aus technologischen Gründen kann es vorteilhaft sein, wenn ein solcher Umlenkspiegel mit mehreren Spiegelflächen als ein einziges Bauteil ausgebildet ist. Dieses Bauteil weist dann vorzugsweise eine Oberfläche auf, welche die Raumform einer aus den einzelnen Spiegelflächen zusammengesetzten Hyperfläche hat. Diese Oberfläche kann ganz oder teilweise verspiegelt sein. Ebenso kann ein Umlenkspiegel mit mehreren Spiegelflächen im Sinne der obigen Beschreibung jedoch auch aus mehreren Bauteilen bestehen. Beispielsweise kann jede Spiegelfläche durch ein separates Spiegelelement gebildet werden.

Die zur Weiterverarbeitung und Darstellung der von der Kamera aufgenommenen Bildsignale notwendigen Bildverarbeitungsschritte, wie etwa Spiegelung, Ausschnitt (Windowing) und Darstellung einer Kombination aus mehreren Bildteilen auf einem Bildschirm, sind in anderem Zusammenhang aus dem Stand der Technik bekannt und sind durch moderne automotive Bildverarbeitungssysteme beherrschbar.

Nach demselben Prinzip erlaubt die erfindungsgemäße Vorrichtung die Mitbenutzung des Heckkamerabildes durch einen Spurführungsassistenten, der z.B. eine relativ schmalwinklige Ansicht in Fahrtrichtung erfordert. Eine solche Ansicht für einen Spurführungsassistenten kann auch zumindest teilweise basierend auf Bildern einer rückwärts oder rückwärts-seitwärts gerichteten Kamera erzeugt werden. Ausgewählte mittels optischer Objekterkennung erkannte Bildmerkmale, insbesondere Fahrbahnmarkierungen, werden dabei virtuell in Fahrtrichtung fortgesetzt. Ein solcher Spurführungsassistent kann insbesondere bei hohen Fahrgeschwindigkeiten angewendet werden, da dann die Annahme eines relativ geraden Verlaufs der Straßenmarkierungen vertretbar ist.

Die Erfindung eignet sich zudem für den Einsatz im Zusammenhang mit vielen anderen automotiven Bildverarbeitungssystemen. Weitere Beispiele sind eine so genannte "Blind-Spot-Detektion" oder eine automatische, auf Objekterkennung basierende, Auffahrwarnung.

Die erfindungsgemäße Verschwenkbarkeit des Markenzeichens kann - wie bereits erwähnt - beispielsweise mit einem Drehmotor bewerkstelligt werden. Sie kann auch vorteilhaft mittels eines elektromagnetischen Aktuators und verschiedener vordefinierter einrastbarer Schwenkstellungen bewerkstelligt werden. Durch die Verwendung einrastbarer Schwenkstellungen kann das Markenzeichen sehr präzise in die jeweilige Schwenkstellung gebracht werden, ohne dass hierfür ein präziser (und somit kostspieliger) Aktuator erforderlich ist.

Bei einem in mechatronischer Hinsicht tri-stabilen erfindungsgemäßen Kamerasystem kann dann beispielsweise ein Verschwenkmechanismus für das Markenzeichen vorgesehen werden, bei welchem das Markenzeichen für jeden der drei einnehmbaren Systemzustände ("*Bildseite zum Fahrzeugäußeren, Kamera aus*", "*Weitwinkel Rückfahrkamera", "kombiniertes Bild zweier Seitenansichten*") in einer entsprechenden Schwenkstellung einrasten kann.

Eine Umschaltung zwischen solchen Systemzuständen kann beispielsweise abhängig von MMI-Befehlen, welche vom Fahrer des Kraftfahrzeugs ausgehen, erfolgen. Sie kann auch ganz oder teilweise automatisch erfolgen (anhand des aktuellen Gangstatus, der aktuellen Geschwindigkeit etc.).

Vorzugsweise kann die Umschaltung der Systemzustände auch anhand der Signale sonstiger umfelderkennender Sensorik des Fahrzeuges, beispielsweise anhand der Signale einer Park Distance Control (PDC), erfolgen. Wird durch die Ultraschallsensorik des PDC beispielsweise ein Hindernis, etwa ein Pfosten oder eine Person, mittig hinter dem Fahrzeug detektiert, während sich das Kamerasystem im Zustand *"kombiniertes Bild zweier Seitenansichten"* befindet, wird vorteilhafterweise automatisch in den Systemzustände "*Weitwinkel Rückfahrkamera"* gewechselt, um das Hindernis im Kamerabild erkennbar zu machen und den Benutzer über die Kollisionsgefahr zu informieren. Zur Umschaltung muss im Wesentlichen lediglich des Markenzeichen von der zum Systemzustand "*kombiniertes Bild zweier Seitenansichten"* gehörigen Schwenkstellung in die zum Systemzustand "*Weitwinkel Rückfahrkamera"* gehörige Schwenkstellung verschwenkt werden. Dies kann sehr einfach und schnell erledigt werden. Insofern bietet die Erfindung auch einen Vorteil in der Schnelligkeit gegenüber gemäß dem Stand der Technik verbreiteten Lösungen mit ausfahrbaren Objektiven, da diese beim plötzlichen Bedarf nicht so rasch ausgefahren werden können. Der Vorteil ist unter anderem dadurch begründet, dass das Gewicht der bewegten Teile bei der Erfindung gegenüber dem Stand der Technik drastisch reduziert wird. Auch die bei Verfahren und Vorrichtungen gemäß dem Stand der Technik häufig erforderliche Zeit zum Hochfahren (Boot-Zeit) oder zum sonstigen Aktivieren eines zusätzlichen Steuergeräts kann bei der Erfindung entfallen, denn vorzugsweise können mehrere bildverarbeitende Systeme, insbesondere Fahrerassistenzsysteme, auf das erfindungsgemäße Kamerasystem zugreifen. Das erfindungsgemäße Kamerasystem weist im einfachsten Fall nur ein einziges Steuergerät auf.

Gemäß einer Weiterbildung der Erfindung können Ergebnisse der Auswertung bzw. Interpretation einer elektronischen Landkarte (z.B. Karte eines Navigationssystems), vorzugsweise in Kombination mit Angaben zur Position des Kraftfahrzeugs, zur voll- oder teilautomatischen Steuerung des Kamerasystems herangezogen werden. Sollte beispielsweise gemäß Interpretation der Kartendaten die Anzeige seitlicher Ansichten sinnvoll sein (im Falle eines am Fahrzeugheck angeordneten Markenzeichens z.B. dann, wenn das Kraftfahrzeug sich rückwärts einer Einmündung in eine Straße nähert) kann das Kamerasystem automatische eine Umschaltung in einen bestimmten Systemzustand (z.B. "*kombiniertes Bild zweier Seitenansichten"*) vornehmen oder eine solche Umschaltung dem Fahrer nahelegen. Dies kann etwa erfolgen, indem ein optischer und/oder akustischer Hinweis ausgegeben wird, auf welchen hin der Fahrer die vorgeschlagene Umschaltung durch eine Bedienaktion bestätigen kann.

Die obigen Beschreibungen und Beispiele beziehen sich überwiegend auf ein Kamerasystem, bei welchem das Markenzeichen am Fahrzeugheck angeordnet ist. Die Kamera kann dann unter anderem als Rückfahrkamera dienen. Eine erfindungsgemäße Vorrichtung entfaltet dieselben bzw. ähnliche Vorteile jedoch auch an anderen Anbringungsorten, insbesondere im Zusammenhang mit einem Markezeichen an der Fahrzeugfront.

Ein wichtiger Vorteil der Verwendung eines Markenzeichens als Zierteil im Sinne der Erfindung ist die Tatsache, dass das Markenzeichen eines Kraftfahrzeugs in der Regel sehr exponiert angeordnet ist. Dies gilt sowohl für die Verbauhöhe als auch für das Herausragen auf der jeweiligen Verbauhöhe. Die erfindungsgemäße Kopplung an ein Markenzeichen ermöglicht somit eine hervorragende effektive Perspektive für die Bildaufnahme.

Die der Verwendung eines Markenzeichens als Zierteil im Sinne der Erfindung erlaubt ferner in der Regel eine zentrale Anordnung der Kamera am Kraftfahrzeug, denn Markenzeichen werden typischerweise in der Fahrzeugmitte angeordnet. Daraus folgt in vielen Fällen eine hohe Bildqualität und es wird eine besonders einfache Bildverarbeitung ermöglicht. Bei Vorrichtungen gemäß dem Stand der Technik muss die Kamera aus konstruktiven Gründen meist von der Mittelachse des Kraftfahrzeugs beabstandet angeordnet werden. Daraus resultiert ohne weitere Maßnahmen häufig eine Asymmetrie des aufgenommenen Bildes. Diese ist teilweise nicht korrigierbar, woraus eine geringe Bildqualität folgt. Eine nachträgliche Korrektur einer solchen Asymmetrie durch Bildverarbeitungsverfahren ist - sofern überhaupt möglich - sehr aufwändig und kann weitere Verzögerungszeiten verursachen.

Die bauliche Kopplung des Umlenkspiegels an ein Markenzeichen hat neben den oben genannten technischen Vorteilen auch den Vorteil, dass das Verschwenken des Markenzeichens beim Betrieb des erfindungsgemäßen Kamerasystems, welches auch für unbeteiligte Personen beobachtbar ist und einen - je nach Interessenslage des Beobachters - eindrucksvollen technischen Vorgang darstellen kann, vom jeweiligen Beobachter mit großer Wahrscheinlichkeit unmittelbar gedanklich mit dem Fahrzeughersteller, auf welchen das Markenzeichen hinweist, in Verbindung gebracht wird.

Anhand der beigefügten Zeichnungen wird im Folgenden ein Ausführungsbeispiel für die Erfindung beschrieben, welches weitere vorteilhafte Ausführungsformen und Weiterbildungen der Erfindung aufzeigt. Dabei zeigen im Einzelnen schematisch
- Fig. 1: einen Querschnitt durch ein erstes erfindungsgemäßes Kamerasystem,
- Fig. 2: einen Querschnitt durch ein zweites erfindungsgemäßes Kamerasystem in einem ersten Systemzustand,
- Fig. 3: einen Querschnitt durch dasselbe erfindungsgemäße Kamerasystem in einem zweiten Systemzustand,
- Fig. 4: einen erfindungsgemäß an ein Markenzeichen gekoppelten Umlenkspiegel mit zwei Spiegelflächen,
- Fig. 5: eine alternative Ausführungsform für einen erfindungsgemäß an ein Markenzeichen gekoppelten Umlenkspiegel mit zwei Spiegelflächen,
- Fig. 6: ein Beispiel für die von den einzelnen Flächenteilen einer Spiegelfläche an einem Umlenkspiegel abgedeckten Blickfelder,
- Fig. 7a: eine erste Bildschirmansicht zur Visualisierung einzelner abgedeckter Blickfelder,
- Fig. 7b: eine zweite Bildschirmansicht zur Visualisierung einzelner abgedeckter Blickfelder und
- Fig. 7c: eine dritte Bildschirmansicht zur Visualisierung einzelner abgedeckter Blickfelder.

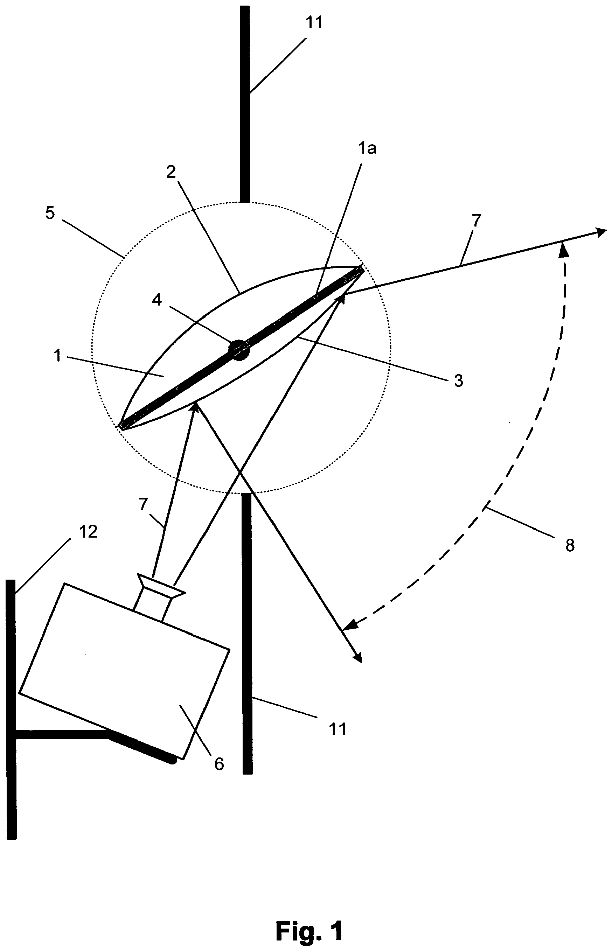

Fig. 1 zeigt einen Querschnitt durch ein erstes erfindungsgemäßes Kamerasystem. Eine Kamera 6 ist vorgesehen, um den Rückraum eines Kraftfahrzeugs im Blickfeld 8 zu überwachen. Die Kamera 6 ist geschützt im Kraftfahrzeuginneren hinter einem Außenblech 11 - hier zu einer Heckklappe gehörig - angebracht. Die Kamera 6 selbst ist an einem Karosserieteil 12 - hier ebenfalls zu der Heckklappe gehörig - festgelegt. Das Außenblech 11 weist eine Öffnung auf, in welcher ein Markenzeichen 1 drehbar um eine Drehachse 4 gelagert ist.

Das Markenzeichen 1 ist so dimensioniert, dass es die Öffnung im Außenblech 11 bei geeigneter Schwenkstellung dicht verschließen kann. Der dichte Verschluss wird von einer rund um die Öffnung im Außenblech 11 verlaufenden, nicht eigens grafisch dargestellten, Dichtung unterstützt. Der Kreis 5 in Fig. 1 verdeutlicht die zum Verschluss der Öffnung geeignete Dimensionierung des Markenzeichens 1. Das Verdrehen des Markenzeichens 1 um die Drehachse 4 erfolgt mittels eines, nicht eigens grafisch dargestellten, Drehaktuators.

Das Markenzeichen umfasst zunächst eine Trägerplatte 1a und eine auf dieser Trägerplatte 1a angebrachten Plakette. Die Plakette trägt auf der Bildseite 2 das Logo des Herstellers des Kraftfahrzeugs. Die Bildseite 2 ist bei geeigneter Verdrehung des Markenzeichens zum Fahrzeugäußeren kehrbar.

Zur Bildaufnahme durch die Kamera 6 kann Licht aus dem Winkelbereich des Blickfelds 8 zur Kamera 6 gespiegelt werden. Hierzu ist auf der Rückseite, d.h. auf der der Bildseite gegenüber liegenden Seite des Markenzeichens ein Umlenkspiegel 3 an dem Markenzeichen angebracht. Die Pfeillinien 7 zwischen Kamera und Spiegel sowie vom Spiegel zum Fahrzeugäußeren veranschaulichen die Spiegelung des vom Fahrzeugäußeren im Blickfeld 8 einfallenden Lichts in die Kamera 6. Die Oberfläche des Umlenkspiegels 3 ist derart gekrümmt, dass sich im vorliegenden Beispiel eine verhältnismäßig weitwinklige Ansicht ergibt.

Die Drehachse 4 verläuft in etwa durch den Schwerpunkt des Markenzeichens 1 samt Plakette und Umlenkspiegel 3, wodurch nur ein sehr geringes Drehmoment für das Verschwenken des Markenzeichens bzw. für das Halten einer bestimmten Schwenkstellung erforderlich ist.

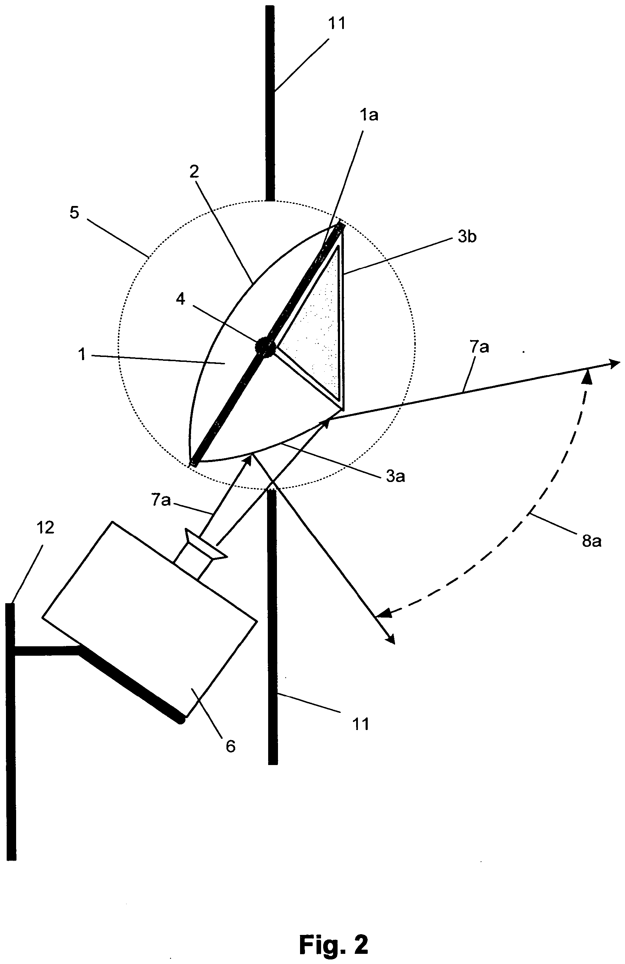

Fig. 2 zeigt einen Querschnitt durch ein zweites erfindungsgemäßes Kamerasystem. Wieder ist eine Kamera 6 vorgesehen, um den Rückraum eines Kraftfahrzeugs im Blickfeld 8 zu überwachen. Auch die mit den Bezugszeichen 1, 1a, 2, 4, 5, 11, 12 bezeichneten Komponenten entsprechen im Wesentlichen denen aus Fig. 1 und erfüllen bei dem in Fig. 2 dargestellten Kamerasystem eine entsprechende Funktion.

Im hier beschriebenen zweiten Ausführungsbeispiel eines erfindungsgemäßen Kamerasystems ist der baulich an das Markenzeichen 1 gekoppelte Umlenkspiegel in zwei Spiegelflächen 3a und 3b unterteilt. Durch ein Verschwenken des Markenzeichens 1 um die Drehachse 4 kann eingestellt werden, welche der beiden Spiegelflächen einfallendes Licht zur Kamera lenkt, d.h. welche der beiden Spiegelflächen "aktiv" ist. In der in Fig. 2 abgebildeten Schwenkstellung ist die erste Spiegelfläche 3a aktiv. Ihre Krümmung bewirkt eine verhältnismäßig weitwinklige Ansicht des Fahrzeugrückraums. Die Pfeillinien 7a verdeutlichen das resultierende weitwinklige Blickfeld 8a.

Die Drehachse 4 verläuft senkrecht zur Fahrzeuglängsachse. Auf diese Weise ergibt sich eine im Wesentlichen entlang der Fahrzeuglängsachse nach hinten gerichtete Ansicht. Diese Ansicht ist geeignet für eine Funktion der Kamera als Rückfahrkamera. Der in Fig. 2 dargestellte Systemzustand wird daher als Systemzustand "*Weitwinkel Rückfahrkamera"* bezeichnet.

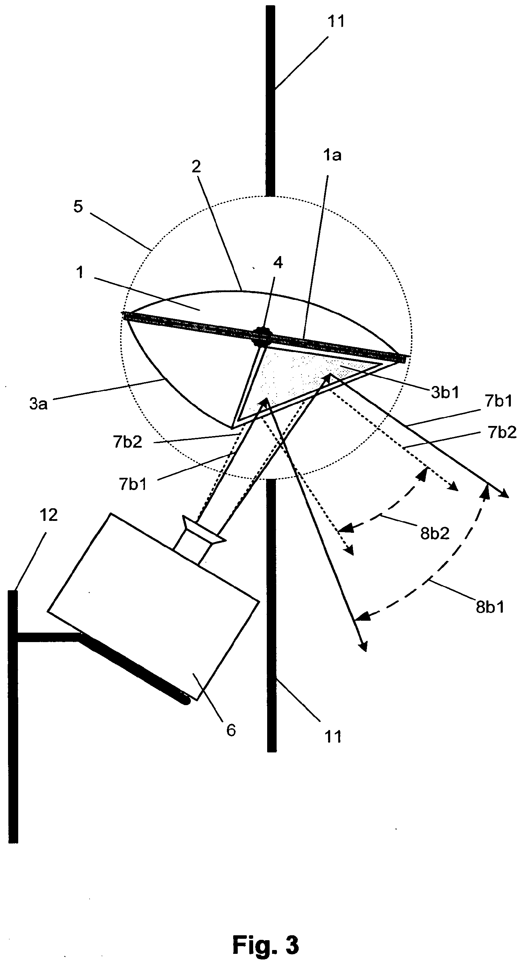

Fig. 3 zeigt einen Querschnitt durch das bereits in Fig. 2 dargestellte Kamerasystem in einem zweiten Systemzustand. Der in Fig. 3 dargestellte Systemzustand wird als Systemzustand *"kombiniertes Bild zweier Seitenansichten"* bezeichnet. Die Systemzustände von Fig. 2 und Fig. 3 unterscheiden sich im Wesentlichen in der Schwenkstellung des Markenzeichens 1 und in den sich daraus ergebenden unterschiedlichen Blickfeldern 8a bzw. 8b1 und 8b2.

Die gemäß Fig. 3 aktive Spiegelfläche ist aus zwei Teilflächen 3b1 und 3b2 zusammengesetzt. Die Teilfläche 3b1 befindet sich bei der Ansicht gemäß Fig. 3 im Vordergrund, die Teilfläche 3b2 im Hintergrund. Die Krümmung der beiden Teilflächen 3b1 und 3b2 und ihre Ausrichtung in der in Fig. 3 gezeigten Schwenkstellung resultieren darin, dass Licht aus zwei nicht aneinander angrenzenden Blickfeldern 8b1 und 8b2 gleichzeitig in die Kamera 6 gespiegelt wird.

Die Pfeillinien 7b1 bzw. 7b2 verdeutlichen in Fig. 3 die resultierenden Blickfelder 8b1 bzw. 8b2. Das Blickfeld 8b1 entspricht einer (in Fahrzeuglängsrichtung) nach links gerichteten Seitenansicht. Das Blickfeld 8b2 entspricht einer nach rechts gerichteten Seitenansicht.

Die Spiegelung der beiden Seitenansichten in die Kamera 6 erfolgt ohne Überlappung derart, dass die Kamera 6 ein zweigeteiltes Bild liefert. Eine Bildhälfte zeigt die linke, die andere Bildhälfte die rechte Seitenansicht.

Das durch die Kamera aufgenommene kombinierte Bild kann dem Fahrer des Kraftfahrzeugs unmittelbar angezeigt werden. Gegebenenfalls können die beiden Bildhälften auch durch geeignete Bildverarbeitungsverfahren separiert werden.

Neben den beiden in Fig. 2 und Fig. 3 dargestellten Systemzuständen kann das Kamerasystem auch in den nicht eigens grafisch dargestellten Systemzustand "*Bildseite zum Fahrzeugäußeren, Kamera aus"* gebracht werden. Das Markenzeichen verschließt dann bei nach außen gekehrter Bildseite 2 die Öffnung im Außenblech 11. Die Kamera 6 und der Umlenkspiegel auf der Rückseite des Markenzeichens sind vor allen Umwelteinflüssen geschützt. Dieser Systemzustand kann immer dann herbeigeführt werden, wenn kein Bild der Kamera 6 benötigt wird. Die Kamera 6 kann dann ausgeschaltet werden.

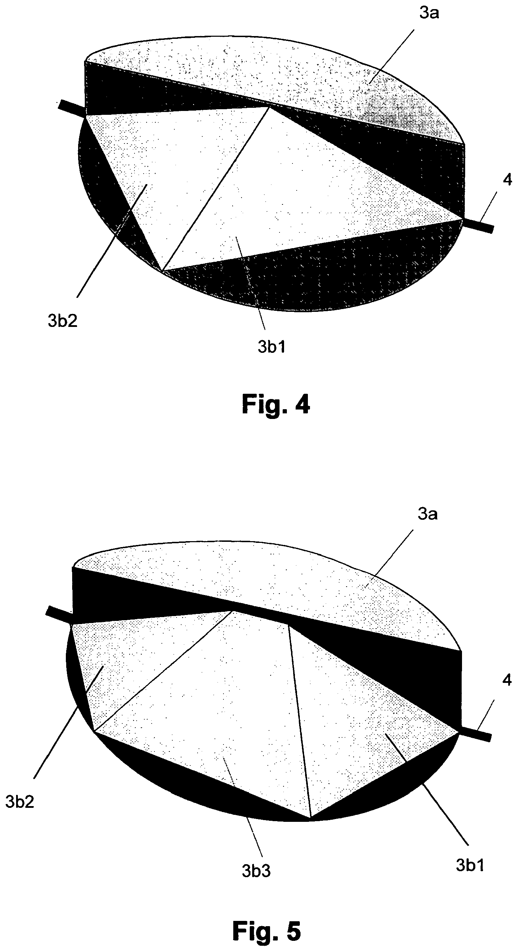

Fig. 4 zeigt einen erfindungsgemäß an ein Markenzeichen gekoppelten Umlenkspiegel mit zwei Spiegelflächen. Es handelt sich dabei um dasselbe Markenzeichen 1 bzw. denselben Umlenkspiegel wie in Fig. 2 und Fig. 3. Die erste Spiegelfläche 3a ist aktiv im Systemzustand "*Weitwinkel Rückfahrkamera"* gemäß Fig. 2. Die aus den Flächenteilen 3b1 und 3b2 zusammengesetzte zweiteilige Spiegelfläche 3b1+3b2 ist aktiv im Systemzustand *"kombiniertes Bild zweier Seitenansichten"gemäß* Fig. 3.

Die bauliche Kopplung des Umlenkspiegels an das Markenzeichen ist so ausgeführt, dass der Umlenkspiegel von dem Markenzeichen lösbar ist. Dies bietet verschiedene Vorteile. Zum einen kann ein beschädigter Umlenkspiegel sehr einfach ausgewechselt werden. Zum anderen können dann verschiedene Arten von Umlenkspiegeln an ein solches Markenzeichen gekoppelt werden. Es können dann je nach Ausführungsform des Umlenkspiegels ganz unterschiedliche optische Abbildungen und somit unterschiedliche Bildaufnahmefunktionen bewerkstelligt werden. Für einen Kraftfahrzeughersteller bietet dies den Vorteil, dass unterschiedliche Varianten von kamerabasierten Fahrerassistenzsystemen realisiert werden können, welche jeweils auf der Erfindung beruhen und sich nur in der Ausführungsform des Umlenkspiegels und gegebenenfalls der nachgeschalteten Bildverarbeitung unterscheiden. Das gesamte übrige Kamerasystem und dessen konstruktive Integration ins Fahrzeug kann ansonsten unverändert bleiben. Es können somit verschiedene Produktvarianten zu minimalen Mehrkosten bereitgestellt und angeboten werden.

Annähernd derselbe Vorteil ergibt sich, wenn das Markenzeichen samt Umlenkspiegel in verschiedenen Varianten bereitgestellt wird, welche sich nur hinsichtlich der Ausführungsform des Umlenkspiegels unterscheiden. Es muss dann lediglich das Markenzeichen samt Umlenkspiegel gegen ein anderes Markenzeichen ausgewechselt werden, um andere optische Abbildungsfunktionen bewirken zu können.

Fig. 5 zeigt eine alternative Ausführungsform für einen erfindungsgemäß an ein Markenzeichen gekoppelten Umlenkspiegel mit zwei Spiegelflächen.

Die erste Spiegelfläche 3a entspricht derjenigen des Umlenkspiegels aus Fig. 4. Sie ist dementsprechend in analoger Art und Weise in einem Systemzustand "*Weitwinkel Rückfahrkamera"* gemäß Fig. 2 verwendbar.

Die zweite Spiegelfläche des Umlenkspiegels gemäß Fig. 5 ist im Gegensatz zur zweiten Spiegelfläche des Umlenkspiegels gemäß Fig. 4 dreiteilig ausgeführt, d.h. zusammengesetzt aus drei Flächenteilen 3b1, 3b2 und 3b3. Die Flächenteile 3b1 und 3b2 sind ähnlich denjenigen des Umlenkspiegels gemäß Fig. 4 ausgeführt. Das Flächenteil 3b3 hingegen eignet sich - bei Verwendung des Umlenkspiegels analog zu Fig. 3 - zur Spiegelung eines gerade hinter dem Kraftfahrzeug liegenden weitwinkligen Blickfelds.

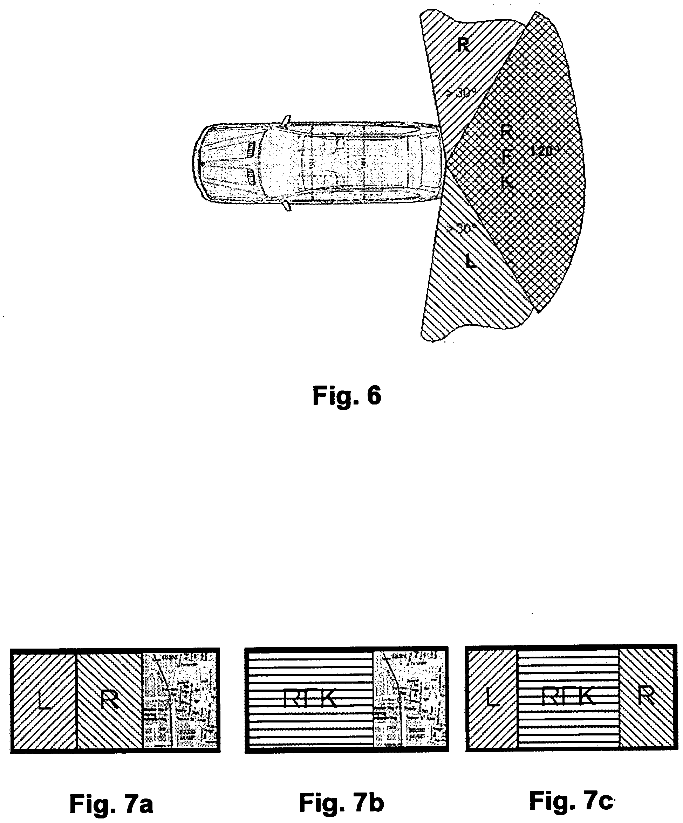

Durch den Umlenkspiegel gemäß Fig. 5 können - bei Verwendung des Umlenkspiegels analog zu Fig. 3 - somit beispielsweise die in Fig. 6 in einer Draufsicht dargestellten Blickfelder abgedeckt werden. Durch die mehrteilige Ausführung der Spiegelfläche 3b1+3b2+3b3 können alle drei Blickfelder R, L, RFK gleichzeitig durch die Kamera 6 aufgenommen werden. Dabei entspricht - bei Verwendung des Umlenkspiegels analog zu Fig. 3 - das Blickfeld L dem Flächenteil 3b1, das Blickfeld R dem Flächenteil 3b2, das Blickfeld RFK dem Flächenteil 3b3.

Da, wie oben beschrieben, der Umlenkspiegel vorteilhafterweise von dem Markenzeichen lösbar ist, kann ein Umlenkspiegel gemäß Fig. 4 sehr einfach durch einen Umlenkspiegel gemäß Fig. 5 ersetzt werden. Bei ggf. entsprechender Anpassung der nachgeschalteten Bildverarbeitungsverfahren können somit sehr einfach auch ganz andere als die in Fig. 6 dargestellten Blickfelder abgedeckt werden.

In der Darstellung gemäß Fig. 6 grenzen die Blickfelder L, R, und RFK aneinander an. Dies erleichtert dem Betrachter die Orientierung bei unmittelbarer Ausgabe des aufgenommenen Kamerabildes, ist jedoch nicht zwingend erforderlich.

Gegebenenfalls können die den einzelnen Blickfeldern entsprechenden Teile des Kamerabildes auch durch geeignete Bildverarbeitungsverfahren separiert werden. Fig. 7a, Fig. 7b und Fig. 7c zeigen verschiedene Varianten, gemäß welcher dann eine Bildausgabe der aufgenommenen Bilddaten auf einem Monitor im Fahrzeuginneren erfolgen kann.

Die Darstellung gemäß Fig. 7a zeigt nur die Bildteile der beiden Seitenansichten, d.h. der Blickfelder L und R, zusammen mit einem Kartenausschnitt eines Navigationssystems.

Die Darstellung gemäß Fig. 7a zeigt nur den Bildteil der Rückfahrkamera-Ansicht, d.h. des Blickfelds RFK, ebenso zusammen mit einem Kartenausschnitt eines Navigationssystems.

Die Darstellung gemäß Fig. 7c zeigt die Bildteile aller drei Blickfelder L, R und RFK.

Die Umschaltung zwischen den gezeigten Varianten der Bildausgabe gemäß Fig. 7a, Fig. 7b oder Fig. 7c kann beispielsweise durch eine Bedienaktion des Fahrers des Kraftfahrzeugs veranlassbar sein. Sie kann auch automatisch, etwa anhand des Gangstatus oder der Fahrgeschwindigkeit *erfolgen.*

## Patentansprüche

1. Kamerasystem für ein Kraftfahrzeug,
umfassend eine Kamera (6), ein schwenkbares Zierteil (1) und einen oder mehrere Umlenkspiegel,
bei welchem einfallende Strahlung über den einen oder die mehreren Umlenkspiegel zu der Kamera lenkbar ist, wobei zumindest ein Umlenkspiegel (3) baulich an das Zierteil gekoppelt ist und durch eine Veränderung der Schwenkstellung des Zierteils eine Veränderung der durch den Umlenkspiegel bewirkten optischen Abbildung verursachbar ist, wobei es sich bei dem Zierteil um ein Markenzeichen des Kraftfahrzeugs handelt, welches wahlweise in zumindest drei verschiedene stabile Schwenkstellungen gebracht werden kann, eine Ruhestellung, in der das optische Erscheinungsbild des an dem Kraftfahrzeug angebrachten Markenzeichens dem optischen Erscheinungsbild eines herkömmlichen Markenzeichens gleicht, und zwei verschiedene Funktionsstellungen, **dadurch gekennzeichnet,**
**dass** der baulich an das Markenzeichen gekoppelte Umlenkspiegel eine erste zur Umlenkung einfallender Strahlung geeignete Spiegelfläche (3a) und eine von der ersten Spiegelfläche unterschiedliche zweite zur Umlenkung einfallender Strahlung geeignete Spiegelfläche (3b, 3b1, 3b2) aufweist und
**dass** das Markenzeichen derart schwenkbar ist, dass einfallende Strahlung wahlweise in einer ersten Funktionsstellung von der erste Spiegelfläche zu der Kamera lenkbar ist oder in einer zweiten Funktionsstellung von der zweiten Spiegelfläche zu der Kamera lenkbar ist.

2. Kamerasystem nach Anspruch 1, **dadurch gekennzeichnet,**
**dass** die zweite Spiegelfläche einen von der ersten Spiegelfläche unterschiedlichen Krümmungsverlauf besitzt.

## Claims

1. A camera system for a motor vehicle,
comprising a camera (6), a pivotable decorative part(1) and one or more deflection mirrors,
in which incident radiation can be directed towards the camera via the one or more deflection mirrors, wherein at least one deflection mirror (3) is coupled structurally to the decorative part a nd the optical imaging brought about by the deflection mirror can be changed by changing the pivot position of the decorative part, wherein the decorative part is a trademark of the motor vehicle, which can be brought optionally into at least three different stable pivot positions, more especially a rest position, in which the optical appearance of the trademark mounted on the motor vehicle assimilates the optical appearance of a conventional trademark, and two different functional positions,
**characterised in that**
the deflection mirror coupled structurally to the trademark has a first mirror face (3a) suitable for deflecting incident radiation and a second mirror face (3b, 3b1, 3b2), which is different from the first mirror face and which is suitable for deflecting incident radiation, and
**in that** the trademark can be pivoted in such a way that incident radiation optionally can be directed in a first functional position towards the camera from the first mirror face or can be directed in a second functional position towards the camera from the second mirror face.

2. A camera system according to claim 1, **characterised in that** the second mirror face has a curvature profile different from the first mirror face.

## Revendications

1. Système de caméra destiné à un véhicule,
comprenant une caméra (6), un élément décoratif pivotant (1) et au moins un miroir de renvoi,
dans lequel le rayonnement incident peut être dévié vers la caméra par l'intermédiaire du ou des miroir(s) de renvoi, au moins un miroir de renvoi (3) étant structurellement couplé à l'élément décoratif, et une modification de la position de pivotement de l'élément décoratif entraînant une modification de l'image optique résultant du miroir de renvoi, l'élément décoratif étant constitué par une marque distinctive du véhicule qui peut sélectivement être positionné dans au moins trois positions de pivotement stables différentes, à savoir une position de repos dans laquelle l'image optique apparente de la marque distinctive apposée sur le véhicule est similaire à l'image optique apparente de la marque distinctive habituelle, et deux positions fonctionnelles différentes,
**caractérisé en ce que**
le miroir de renvoi structurellement couplé à la marque distinctive comporte une première surface de miroir (3a) adaptée pour dévier un rayonnement incident et une seconde surface de miroir (3b, 3b1, 3b2) différente de la première surface de miroir et adaptée pour dévier un rayonnement incident, et
la marque distinctive peut pivoter de sorte qu'un rayonnement incident puisse sélectivement être dévié dans une première position fonctionnelle de la première surface de miroir vers la caméra ou puisse être dévié dans une seconde position fonctionnelle de la seconde surface de miroir vers la caméra.

2. Système de caméra conforme à la revendication 1,
**caractérisé en ce que**
la seconde surface de miroir a une courbure différente de celle de la première surface de miroir.
